(19) Europäisches Patentamt
European Patent Office
Office européen des brevets

(11) Publication number: **0 491 387 A2**

# (12) EUROPEAN PATENT APPLICATION

(21) Application number: **91121726.3**

(22) Date of filing: **18.12.91**

(51) Int. Cl.[5]: **C09B 67/22**, D06P 3/54, //C09B25/00,C09B29/42

(30) Priority: **18.12.90 JP 403392/90**

(43) Date of publication of application: **24.06.92 Bulletin 92/26**

(84) Designated Contracting States: **BE CH DE ES FR GB IT LI**

(71) Applicant: **HOECHST MITSUBISHI KASEI CO., LTD.**
**10-33, Akasaka 4-chome**
**Minato-ku, Tokyo(JP)**

(72) Inventor: **Seto, Kouchi**
**6-8-16, Kasugadai, Yahatanishi-ku**
**Kitakyushu-shi, Fukuoka-ken(JP)**
Inventor: **Sekioka, Riyouichi**
**4-15, Hanao-machi, Yahatahigashi-ku**
**Kitakyushu-shi, Fukuoka-ken(JP)**

(74) Representative: **Wächtershäuser, Günter, Dr.**
**Tal 29**
**W-8000 München 2(DE)**

## (54) Disperse dye mixture and method for dyeing polyester fibers.

(57) A disperse dye mixture comprising a yellow disperse dye of the following formula (A) and at least one yellow disperse dye of the following formula (B) in a weight ratio of (B)/(A) of from 0.2 to 2:

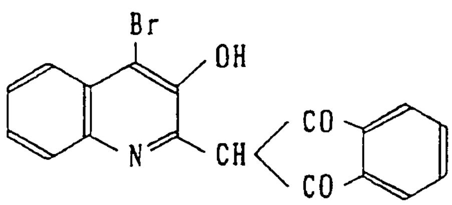

(A)

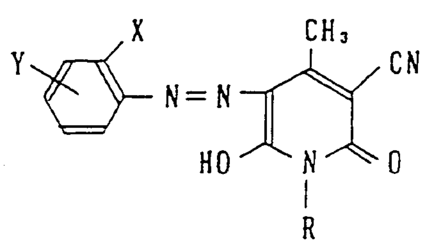

(B)

wherein X is a hydrogen atom or a nitro group, Y is a halogen atom, a phenoxyethoxycarbonyl group or a phenylsulfonyloxy group, and R is a $C_1$-$C_8$ linear or branched alkyl group.

EP 0 491 387 A2

The present invention relates to a disperse dye mixture. More particularly, it relates to a yellow disperse dye mixture which is excellent not only in the light fastness but also in the dyeing affinity, the temperature dependency and the high temperature dispersibility at the time of dyeing.

A yellow disperse dye of the following structural formula (A) is known as a dye excellent in the light fastness when used for dyeing polyester fibers (Japanese Examined Patent Publication No. 11339/1961):

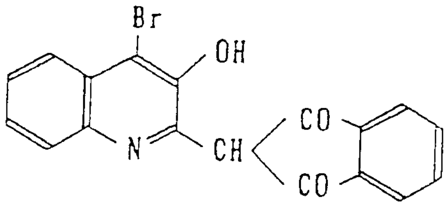

(A)

However, this disperse dye is not adequate in the dyeing affinity at the time of carrier dyeing whereby it is possible to dye polyester fibers at a temperature lower than the usual dyeing temperature by the use of a carrier, and the temperature dependency. Further, it has poor compatibility with certain dyes such as red dyes of the following formula and thus has a problem in the high temperature dispersibility when blended with such red dyes:

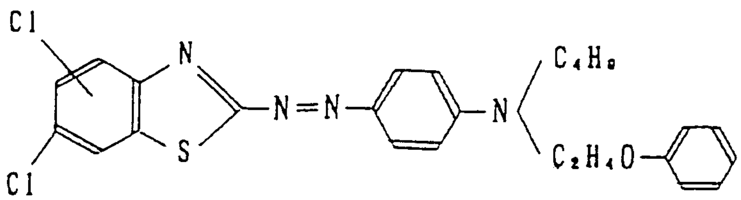

(C)

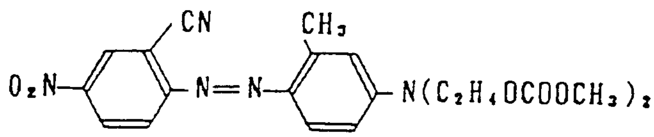

(D)

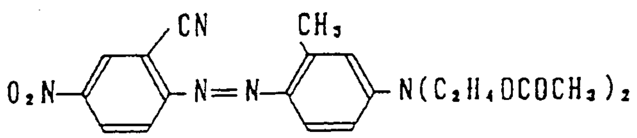

(E)

It is an object of the present invention to improve the dyeing affinity, the temperature dependency and the high temperature dispersibility while maintaining the excellent light fastness of a yellow disperse dye of the above formula (A).

Under the above circumstances, the present inventors have conducted extensive researches and as a result, have found that when the yellow dye of the above formula (A) is used in admixture with other yellow dye having a certain specific structure, the dyeing properties can be remarkably improved over the case where the dye is used alone.

Thus, the present invention provides a disperse dye mixture comprising a yellow disperse dye of the following formula (A) and at least one yellow disperse dye of the following formula (B) in a weight ratio of (B)/(A) of from 0.2 to 2:

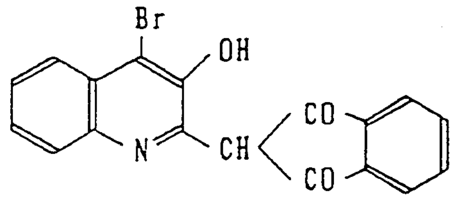

(A)

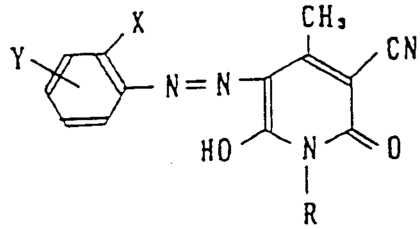

(B)

wherein X is a hydrogen atom or a nitro group, Y is a halogen atom, a phenoxyethoxycarbonyl group or a phenylsulfonyloxy group, and R is a $C_1$-$C_8$ linear or branched alkyl group, and a method for dyeing polyester fibers using such a disperse dye mixture.

Now, the present invention will be described in detail with reference to the preferred embodiments.

The dyes of the above formulas (A) and (B) are per se known from Japanese Examined Patent Publications No. 11339/1961 and No. 18549/1972.

In the present invention, the yellow disperse dyes of the above formulas (A) and (B) are mixed, and the blend ratio is such that component (B) is from 0.2 to 2 times, preferably from 0.3 to 1.5 times, by weight to component (A). If the amount of component (B) is too small or too large, the effects for improving the dyeing affinity and the temperature dependency will be small.

In the above formula (B), the halogen atom for Y is usually a chlorine atom or a bromine atom. Substituent Y is preferably located at the 3- or 4-position to the azo group on the benzene ring (however, substituent X is located at the 2-position). The $C_1$-$C_8$ alkyl group for R may be methyl, ethyl, n-propyl, i-propyl, n-butyl, t-butyl, n-pentyl, n-hexyl, n-heptyl or n-octyl, but a $C_1$-$C_4$ alkyl group is particularly preferred.

In the present invention, at least two types of the above-mentioned disperse dyes are used in combination as yellow components. However, a blue component and a red component may further be incorporated to attain a desired color hue.

There is no particular restriction as to such components to be incorporated to the disperse dye mixture of the present invention. For example, when a red component is to be incorporated, a red dye of the above formula (C) may be employed. When a red dye of the above formula (C) is to be incorporated, the dye of the formula (B) contained in the disperse dye mixture of the present invention is preferably the one wherein X is hydrogen, and Y is a phenoxyethoxycarbonyl group or a phenylsulfonyloxy group, from the viewpoint of the high temperature dispersibility of the dye mixture thereby obtained.

The disperse dyes (A) and (B) to be used in the present invention are known from Japanese Examined Patent Publications No. 11339/1961 and No. 18549/1972, as mentioned above, and can readily be prepared in accordance with the methods disclosed in these publications.

To use the disperse dye mixture of the present invention, the dye components for the mixture are mixed respectively with a known anionic dispersant such as a naphthalene sulfonic acid-formalin condensation product or a lignin sulfonic acid-formalin condensation product in accordance with a conventional method, and the respective dye cakes obtained are subjected to disperse treatment, followed by mixing, or the respective dye components are firstly mixed, followed by subjecting the mixture to disperse treatment in the same manner, to obtain a disperse dye composition.

The disperse dye mixture of the present invention is used primarily for dyeing polyester fibers. The polyester fibers to be dyed may be employed by themselves or may be mixed with other fibers.

The present invention may be applied to various dyeing methods. However, when applied to an exhaustion dyeing method, the present invention provides a particularly excellent dyeing affinity, temperature dependency and high temperature dispersibility. There is no particular restriction as to the dyeing conditions for exhaustion dyeing. For example, the dyeing temperature may be at a level of from 95 to 140 ° C, and the pH of the dyeing bath may be at a level of from 4 to 9.5.

The disperse dye mixture of the present invention having a certain specific yellow disperse dye mixed to a yellow disperse dye of the above formula (A) provides improved carrier dyeing properties, temperature dependency and high temperature dispersibility while maintaining the excellent light fastness inherent to the

yellow disperse dye of the formula (A). Thus, it is practically very useful.

Now, the present invention will be described in further detail with reference to Examples. However, it should be understood that the present invention is by no means restricted to such specific Examples.

## REFERENCE EXAMPLE

### Preparation of various disperse dye compositions

(1) 31 g of a disperse dye of the formula (A) was pulverized in a wet system for 5 hours together with 48 g of a methylnaphthalene sulfonic acid-formalin condensation product, 21 g of a cresol-formalin condensation product and 300 g of water by a sand grinder, followed by spray drying to obtain a powdery dye composition A.

(2) 47 g of a disperse dye of B-1 in the following Table 1 was pulverized in a wet system for 5 hours together with 27 g of a lignin sulfonic acid-formalin condensation product, 26 g of a naphthalene sulfonic acid-formalin condensation product and 300 g of water by a sand grinder, followed by spray drying to obtain a powdery dye composition B-1.

(3) 39 g of a disperse dye of B-2 in the following Table 1 was pulverised in a wet system for 5 hours together with 35 g of a lignin sulfonic acid-formalin condensation product, 26 g of a cresol-formalin condensation product and 300 g of water by a sand grinder, followed by spray drying to obtain a powdery dye composition B-2.

(4) 54 g of a disperse dye of B-3 in the following Table 1 was pulverized in a wet system for 5 hours together with 34 g of a lignin sulfonic acid-formalin condensation product, 12 g of a cresol-formalin condensation product and 300 g of water by a sand grinder, followed by spray drying to obtain a powdery dye composition B-3.

Table 1

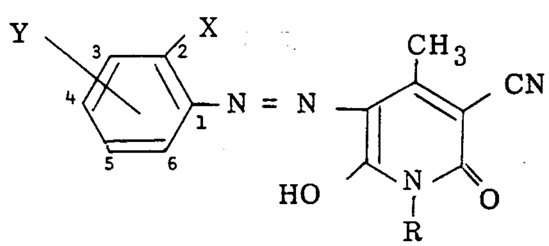

| | X | Y | R |
|---|---|---|---|
| B-1 | H | 4-$COOC_2H_4O$-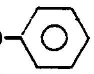 | $CH_3$ |
| B-2 | H | 3-$OSO_2$-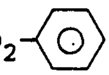 | $CH_3$ |
| B-3 | $NO_2$ | 4-Cℓ | $C_2H_5$ |

## EXAMPLES 1 TO 4 AND COMPARATIVE EXAMPLES 1 TO 5

The disperse dye compositions A and B-1 to B-3 prepared in Reference Example were blended in the proportions as identified in Table 2 to obtain dye mixtures. Using such dye mixtures, various dyeing tests were conducted and evaluated in accordance with the methods described below. The results are shown in Table 2.

### Dyeing tests

(1) High temperature dyeing

A polyester spun-cloth was dyed at a bath ratio of 1:10 at 135°C for 30 minutes at a dyeing concentration of 1/1N, 2/1N or 1/2N using a dyeing bath containing 1 g/ℓ of an anionic leveling agent and adjusted to pH 5.0±0.5 by acetic acid and sodium acetate. The dyed cloth thus obtained was subjected to reduction cleaning at 80°C for 10 minutes by means of 2 g/ℓ of sodium hydroxide, 2 g/ℓ of hydrosulfite and 1 g/ℓ of a special anionic-nonionic surfactant.

(2) Carrier dyeing

A polyester spun-cloth was dyed at a bath ratio of 1:10 at 98°C for 60 minutes at a dyeing concentration of 2/1N using a dyeing bath containing 1 g/ℓ of an anionic leveling agent and 8% o.w. f. of a diphenyl derivative carrier and adjusted to pH5.0±0.5 by acetic acid and sodium acetate. The dyed cloth thus obtained was subjected to reduction cleaning at 80°C for 10 minutes by means of 2 g/ℓ of sodium hydroxide, 2 g/ℓ of hydrosulfite and 1 g/ℓ of a special anionic-nonionic surfactant, followed by dry heat treatment at 160°C for two minutes to remove the carrier.

Evaluation methods

(1) Carrier dyeing properties

The surface densities of the cloths dyed by high temperature dyeing and by carrier dyeing at a dyeing concentration of 2/1N, were measured, and the carrier dyeing property was evaluated in accordance with the following formula.

Carrier dyeing property = (The surface density of the cloth dyed by carrier dyeing/The surface density of the cloth dyed by high temperature dyeing) × 100 (%)

(2) Temperature dependency

The surface densities of the cloths dyed at dyeing temperatures of 135°C and 120°C, respectively, at a dyeing concentration of 2/1N by high temperature dyeing, were measured, and the temperature dependency was evaluated in accordance with the following formula:

Temperature dependency = (The surface density of the cloth dyed at a dyeing temperature of 120°C/The surface density of the cloth dyed at a dyeing temperature of 135°C) × 100 (%)

(3) Light fastness

Using the cloth dyed at a dyeing concentration of 1/2N by high temperature dyeing, an evaluation was conducted in accordance with JIS L0842-1971.

(4) High temperature filtration test (high temperature dispersibility-1)

200 ml of a dyeing bath containing 1.6 g of a dye and 1 g/ℓ of a leveling agent and having the pH adjusted to 5 by acetic acid and ammonium sulfate (corresponding to dyeing conditions such that the dyeing ratio is 1:10 and a dyeing concentration of 4/1N) was boiled at 130°C for 60 minutes. After cooling, it was separated into portions of 100 ml each at 90°C, which were filtered under suction through a cotton blord #40 (70 mm in diameter) and Toyo filter paper No. 5-A (70 mm in diameter), whereupon the amounts of the colorant components remained on the filter materials were visually evaluated in accordance with the following standards:

| | |
|---|---|
| Grade 3 (Good): | No color component remained on the filter materials. |
| Grade 2 (Slightly poor): | Some color component remained on the filter materials. |
| Grade 1 (Poor): | The amount of the color component remained on the filter materials is substantial. |

(5) High temperature filtration test at the time of blending (high temperature dispersibility-2)

The test was conducted and evaluated in the same manner as in the high temperature filtration test except that 6 g/ℓ of the disperse dye having the above structure (C) and 2 g/ℓ of one of the dyes in

Examples 1 to 4 and Comparative Examples 1 to 6 disclosed in Table 2 were blended for use.

Table 2

| | Dyes employed and their blend ratios | Carrier dyeing property (%) | Temp. dependency (%) | Light fastness (degree) | High temp. dispersibility-1 (degree) | High temp. dispersibility-2 (degree) |
|---|---|---|---|---|---|---|
| Example 1 | (A)+(B-1)=70+30 | 58 | 77 | 6 | 3 | 3 |
| Example 2 | (A)+(B-1)=40+60 | 50 | 70 | 6 | 3 | 3 |
| Example 3 | (A)+(B-2)=70+30 | 56 | 73 | 6 | 3 | 3 |
| Example 4 | (A)+(B-3)=60+40 | 77 | 98 | More than 6 | 3 | 1 |
| Comparative Example 1 | A (alone) | 40 | 50 | More than 6 | 3 | 1 |
| Comparative Example 2 | B-1 (alone) | 15 | 25 | 5-6 | 2 | 1 |
| Comparative Example 3 | B-2 (alone) | 15 | 25 | 5-6 | 3 | 3 |
| Comparative Example 4 | B-3 (alone) | 40 | 50 | 6 | 3 | 1 |
| Comparative Example 5 | (B-1)+(B-2)=50+50 | 28 | 58 | 5-6 | 3 | 3 |

## Claims

1. A disperse dye mixture comprising a yellow disperse dye of the following formula (A) and at least one

yellow disperse dye of the following formula (B) in a weight ratio of (B)/(A) of from 0.2 to 2:

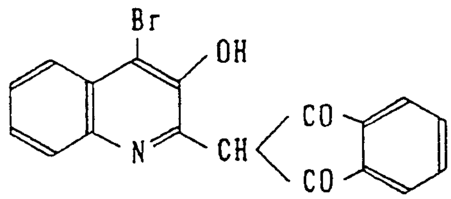

(A)

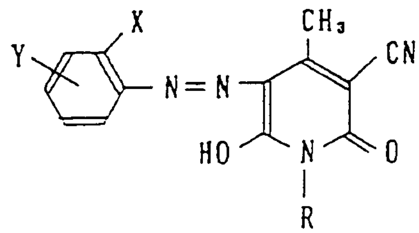

(B)

wherein X is a hydrogen atom or a nitro group, Y is a halogen atom, a phenoxyethoxycarbonyl group or a phenylsulfonyloxy group, and R is a $C_1$-$C_8$ linear or branched alkyl group.

**2.** The disperse dye mixture according to Claim 1, wherein the weight ratio of (B)/(A) is from 0.3 to 1.5.

**3.** The disperse dye mixture according to Claim 1, wherein R in the formula (B) is a $C_1$-$C_4$ linear or branched alkyl group.

**4.** The disperse dye mixture according to Claim 1, wherein the yellow disperse dye of the formula (B) has substituent Y at the 3- or 4-position to the amino group in the benzene ring.

**5.** The disperse dye mixture according to Claim 1, wherein the yellow disperse dye of the formula (B) is at least one member selected from the group consisting of dyes of the following formulas (B-1), (B-2) and (B-3):

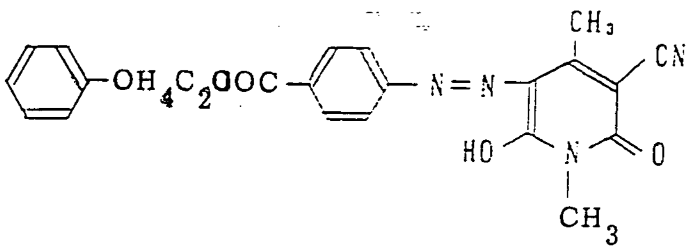

(B-1)

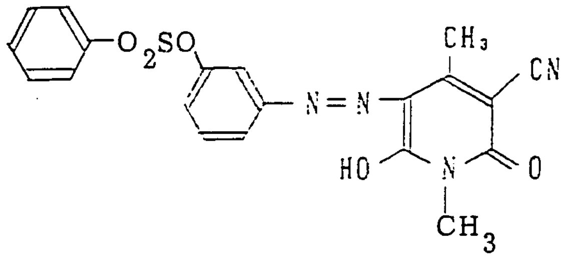

(B-2)

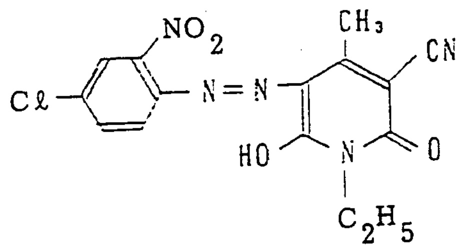

(B-3)

**6.** A method for dyeing polyester fibers with a dye mixture, wherein the dye mixture comprises a yellow disperse dye of the following formula (A) and at least one yellow disperse dye of the following formula (B) in a weight ratio of (B)/(A) of from 0.2 to 2:

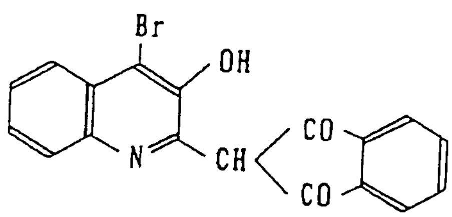

(A)

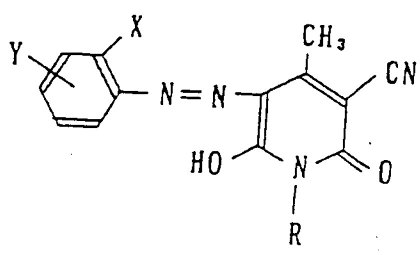

(B)

wherein X is a hydrogen atom or a nitro group, Y is a halogen atom, a phenoxyethoxycarbonyl group or a phenylsulfonyloxy group, and R is a $C_1$-$C_8$ linear or branched alkyl group.